# EUROPEAN PATENT SPECIFICATION

(11) **EP 3 229 414 B1**
(45) Date of publication and mention of the grant of the patent: **12.06.2019**
(21) Application number: 15864495.5
(22) Date of filing: 22.09.2015
(51) Int. Cl.: H04L 12/46, H04L 12/24

(54) **METHOD AND SYSTEM FOR TRANSMITTING MANAGEMENT INFORMATION**
VERFAHREN UND SYSTEM ZUR ÜBERTRAGUNG VON VERWALTUNGSINFORMATIONEN
PROCÉDÉ ET SYSTÈME DE TRANSMISSION D'INFORMATIONS DE GESTION

(30) Priority: 03.12.2014 CN 201410728240
(43) Date of publication of application: 11.10.2017
(73) Proprietor: ZTE Corporation, Shenzhen, Guangdong 518057 (CN)
(72) Inventor: LIU, Guanwei, Shenzhen Guangdong 518057 (CN); ZHAN, Hailiang, Shenzhen Guangdong 518057 (CN); ZHANG, Qiao, Shenzhen Guangdong 518057 (CN); AI, Hua, Shenzhen Guangdong 518057 (CN)
(74) Representative: Brunazzi, Stefano
(86) International application number: PCT/CN2015/090311
(87) International publication number: WO 2016/086707

(56) References cited:
- CN-A- 102 045 184
- CN-A- 102 171 974
- US-A1- 2003 188 003
- US-A1- 2008 267 072
- US-A1- 2008 270 588
- US-A1- 2013 315 096

## Description

### Technical field

The present disclosure relates to the field of communications, in particular to a method and system for transmitting management information.

### Background

A Data Communication Network (DCN) provides a communication channel for managing network elements, so as to achieve remote management and maintenance of network elements.

The DCN may be divided into internal DCN and external DCN. The internal DCN refers to internal communication of a network element. The external DCN refers to communication between different network elements.

There may be two types of communication channels, i.e., out-band communication channel and in-band communication channel. The out-band channel refers to a dedicated physical channel configured to transmit management information between different network elements. The in-band channel refers to a service channel, which is adopted to transmit management information, of a service board.

The U.S. Patent Application US 2008/267072 A1 describes a data communication network for the management of an Ethernet transport network.

The U.S. Patent Application US 2008/270588 A1 describes a solution for verifying management Virtual Local Area Network Identifier provisioning consistency.

The U.S. Patent Application US 2003/188003 A1 describes a method and an apparatus for the provision of unified systems and network management of aggregates of separate systems.

The network elements in the DCN network may contain different units. The service channels between different units are physical layer channels, and the physical channels between different units may be different. As a result, the transmission of the management information may need the support of special hardware or creation of new physical channels, leading to an increase in design and hardware cost.

### Summary

Some embodiments of the present disclosure provide a method and system for transmitting management information, which may at least solve the problem that the transmission of management information may need the support of special hardware or creation of new physical channels, which leads to an increase in design and hardware cost.

An embodiment of the present disclosure provides a method for transmitting management information, which may include the following acts.

A master control unit allocates a Virtual Local Area Network (VLAN) channel resource to each non-master control unit with which a link is established, and sends information of the allocated VLAN channel resource to a corresponding non-master control unit.

The non-master control unit creates a virtual network port according to the information of the allocated VLAN channel resource. The virtual network port may be configured to transmit and/or receive management information transmitted through a VLAN channel.

The master control unit notifies a Layer 2 switching unit to create a VLAN channel.

The Layer 2 switching unit creates the VLAN channel, and adds a physical port of a unit corresponding to the VLAN channel into the VLAN channel in a form of a tag.

The management information is transmitted through the VLAN channel.

In an exemplary embodiment, the non-master control unit may include a Layer 3 routing unit. The act of creating, by the Layer 2 switching unit, the VLAN channel may include the following act. The Layer 2 switching unit creates the VLAN channel between the Layer 3 routing unit and an interactive unit.

In an exemplary embodiment, the interactive unit may include a master control unit and a service transmission unit. The act of creating the VLAN channel between the Layer 3 routing unit and the interactive unit may include the following acts. A first VLAN channel is created between the Layer 3 routing unit and the service transmission unit. A second VLAN channel is created between the Layer 3 routing unit and the master control unit.

In an exemplary embodiment, the interactive unit may further include an access unit. The act of creating the VLAN channel between the Layer 3 routing unit and the interactive unit may further include the following act. A third VLAN channel is created between the Layer 3 routing unit and the access unit.

In an exemplary embodiment, the act of transmitting the management information through the VLAN channel may include the following acts. The service transmission unit acquires the management information from a service channel, and transmits the management information to the Layer 3 routing unit through the first VLAN channel. The Layer 3 routing unit processes the management information and selects a corresponding VLAN channel to transmit the management information.

In an exemplary embodiment, the act of transmitting the management information through the VLAN channel may include at least one of the following acts.

The access unit acquires the management information from a network management unit, and transmits the management information to the Layer 3 routing unit through the third VLAN channel. The Layer 3 routing unit processes the management information and selects a corresponding VLAN channel to transmit the management information.

The service transmission unit acquires the management information from a service channel, and transmits the management information to the Layer 3 routing unit through the first VLAN channel. The Layer 3 routing unit processes the management information and selects a corresponding VLAN channel to transmit the management information.

In an exemplary embodiment, the act that the Layer 3 routing unit processes the management information and selects the corresponding VLAN channel to transmit the management information may include the following acts.

The Layer 3 routing unit judges whether a port of the management information is a local network element. When the port of the management information is the local network element, the Layer 3 routing unit transmits the management information to the master control unit through the second VLAN channel. When the port of the management information is not the local network element, the Layer 3 routing unit transmits the management information to the service transmission unit through the first VLAN channel, and the service transmission unit forwards the management information to other network elements through a service channel.

Another embodiment of the present disclosure provides a system for transmitting management information, which may include a master control unit, one or more non-master control units and a Layer 2 switching unit.

The master control unit is configured to receive a link request from each non-master control unit, allocate a VLAN channel resource to each non-master control unit after a link between the master control unit and the non-master control unit is established, and send information of the allocated VLAN channel resource to a corresponding non-master control unit.

Each non-master control unit is configured to receive the information of the VLAN channel resource allocated by the master control unit and create a virtual network port according to the information of the allocated VLAN channel resource, and the virtual network port is configured to transmit and/or receive management information transmitted through a VLAN channel.

The master control unit is configured to transmit notification information for creating a VLAN channel to the Layer 2 switching unit.

The Layer 2 switching unit is configured to receive the notification information, create the VLAN channel according to the notification information, and add a physical port of a unit corresponding to the VLAN channel into the VLAN channel in a form of a tag; and the VLAN channel is configured to transmit the management information.

In an exemplary embodiment, the non-master control unit may include a Layer 3 routing unit. The Layer 2 switching unit may be configured to create the VLAN channel between the Layer 3 routing unit and an interactive unit according to the notification information.

In an exemplary embodiment, the interactive unit may include a master control unit and a service transmission unit. The Layer 2 switching unit may be further configured to create a first VLAN between the Layer 3 routing unit and the service transmission unit, and create a second VLAN channel between the Layer 3 routing unit and the master control unit.

In an exemplary embodiment, the interactive unit may further include an access unit. The Layer 2 switching unit may be further configured to create a third VLAN channel between the Layer 3 routing unit and the access unit.

Some embodiments of the disclosure have the following advantages.

According to some embodiments of the present disclosure, a method and a system for transmitting management information are provided. In the method for transmitting the management information, a master control unit allocates a VLAN channel resource to each non-master control unit with which a link is established, and sends information of the allocated VLAN channel resource to a corresponding non-master control unit. The non-master control unit creates a virtual network port according to the information of the allocated VLAN channel resource, and the virtual network port is configured to send and/or receive the management information through a VLAN channel. The master control unit notifies a Layer 2 switching unit to create a VLAN channel. The Layer 2 switching unit creates the VLAN channel and adds a physical port of a unit corresponding to the VLAN channel into the VLAN channel in a form of a tag. The management information is transmitted through the VLAN channel. The solution does not need the support of special hardware or new physical channels. The transmission of management information in the entire network can be achieved by virtue of VLAN-based forwarding in a Layer 2 network, thereby simplifying configuration process, reducing design and hardware cost and providing a simple method for constructing a DCN network based on a variety of systems.

### Brief Description of the Drawings

Fig. 1 is a flowchart of a method for transmitting management information provided in a first embodiment of the present disclosure;
Fig. 2 is a flowchart of a method for transmitting management information provided in a second embodiment of the present disclosure;
Fig. 3 is a flowchart of a link establishment process of an access network element in a method for transmitting management information provided in a third embodiment of the present disclosure;
Fig. 4 is a flowchart of creating a VLAN channel by an access network element in a method for transmitting management information provided in a third embodiment of the present disclosure;
Fig. 5 is a flowchart of creating a VLAN channel for a non-access network element in a method for transmitting management information provided in a third embodiment of the present disclosure;
Fig. 6 is a flowchart of transmitting management information of an access network element in a method for transmitting management information provided in a third embodiment of the present disclosure;
Fig. 7 is a flowchart of transmitting management information of a non-access network element in a method for transmitting management information provided in a third embodiment of the present disclosure;
Fig. 8 is a structural schematic diagram of a system for transmitting management information provided in a fourth embodiment of the present disclosure;
Fig. 9 is a schematic diagram of a first deployment structure of each unit in a system for transmitting management information provided in a fourth embodiment of the present disclosure;
Fig. 10 is a schematic diagram of a second deployment structure of each unit in a system for transmitting management information provided in a fourth embodiment of the present disclosure;
Fig. 11 is a schematic diagram of a third deployment structure of each unit in a system for transmitting management information provided in a fourth embodiment of the present disclosure; and
Fig. 12 is a schematic diagram of a fourth deployment structure of each unit in a system for transmitting management information provided in a fourth embodiment of the present disclosure.

### Detailed Description of the Embodiments

### First embodiment

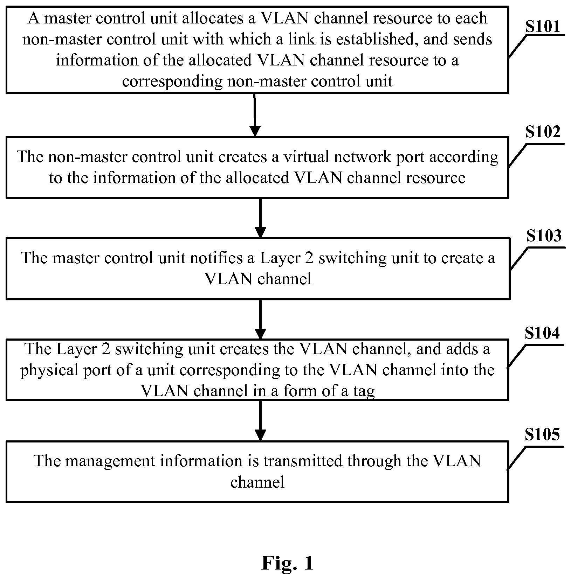

The method for transmitting management information provided by the present embodiment, as shown in Fig. 1, may include the following acts.

At act S101, a master control unit allocates a Virtual Local Area Network (VLAN) channel resource to each non-master control unit with which a link is established, and sends information of the allocated VLAN channel resource to a corresponding non-master control unit.

In this act, a VLAN for internal communication is provided in the system by default, and the master control unit communicates with other units through this VLAN. Within one network element, the master control unit and other units are deployed based on C/S architecture, and the other units, serving as Clients, actively establish links with the master control unit which serves as a server. The other units mentioned herein may mainly refer to other non-master control units. The non-master control unit may include at least one of: a service transmission unit, a Layer 3 routing unit, and an access unit. The master control unit allocates the VLAN channel resource and sends the information of the specific allocated VLAN resource to each non-master control unit with which a link is established. As an exemplary embodiment, the master control unit may allocate the VLAN channel resource according to a rule preset on the master control unit. As another exemplary embodiment, the master control unit may also allocate the VLAN channel resource according to unit information sent by the other non-master control units after links between the other non-master control units and the master control unit have been established. The allocation of the specific VLAN channel resource may include the allocation regarding which units belong to which channel, how many channels are adopted, and the like. The unit information mentioned herein may be embodied as attribute information of the other units. For example, the unit information may include a slot number of a board where the unit is located, a unit type, the number of VLAN channels required and the like. The unit type may mainly refer to information identifying the type of the unit. For example, the type of the unit may include the access unit, the Layer 3 routing unit, the Layer 2 switching unit, the master control unit, the service transmission unit and the like. As a recommended implementation mode, the unit type may be expressed by specific symbols or numerals. For example, numerals may be adopted to indicate the type of each unit, e.g., 1 for access unit, 2 for Layer 2 routing unit, 3 for Layer 3 switching unit, 4 for master control unit, and 5 for service transmission unit. It may be appreciated that the unit type may be expressed by other manners, and the specific manners may be set according to practical requirements. The number of VLAN channels required for the service transmission unit may be generally determined based on the number of transmission service ports, and the number of VLAN channels required for each of the other units may be set as one by default. For example, if the non-master control unit includes a Layer 3 routing unit and an access unit, then after the master control unit receives the unit information of the Layer 3 routing unit and the unit information of the access unit, the master control unit may allocate VLAN channels to the Layer 3 routing unit and the access unit, so as to implement the transmission of management information from the access unit to the Layer 3 routing unit.

As act S102, the non-master control unit creates a virtual network port according to the information of the allocated VLAN channel resource. The virtual network port may be configured to transmit and/or receive management information transmitted through a VLAN channel.

In this act, the non-master control unit receives the information of the allocated VLAN channel resource and creates the corresponding virtual network port, which sends and/or receives the management information transmitted by the VLAN channel. The information of the allocated VLAN channel resource may include, e.g., VLANid information of the VLAN channel. For example, the master control unit allocates a third VLAN channel to the access unit and the Layer 3 routing unit so as to realize the transmission from a network management personal computer (PC) to the Layer 3 routing unit. In such a case, the master control unit notifies the access unit and the Layer 3 routing unit of the VLANid. The access unit and the Layer 3 routing unit create a virtual network port after receiving the VLANid. The virtual network port may be dedicated to sending and receiving 802.1Q packets containing a transmission tag of the third VLAN channel, that is, management information in the 802.1Q format. The virtual network port may be further set as an outgoing port for the Layer 3 routing unit.

At act S103, the master control unit notifies a Layer 2 switching unit to create a VLAN channel.

In this act, the master control unit may notify the Layer 2 switching unit to create a corresponding VLAN channel after allocating the VLAN channel resource. For example, if the master control unit allocates a first VLAN channel and a second VLAN channel, then the master control unit may notify the Layer 2 switching unit to create the first VLAN channel and the second VLAN channel.

At act S104, the Layer 2 switching unit creates the VLAN channel, and adds a physical port of a unit corresponding to the VLAN channel into the VLAN channel in a form of a tag.

In this act, the Layer 2 switching unit, after receiving the notification from the master control unit, may create and open the corresponding VLAN channel. For example, the Layer 2 switching unit may create a third VLAN channel between the Layer 3 routing unit and the access unit, where a portA and a portB are physical ports of the Layer 3 routing unit and the access unit, then the portA and the portB may be added into the third VLAN channel in the form of a tag, so that the third VLAN channel between the access unit and the Layer 3 routing unit is opened.

At act S105, the management information is transmitted through the VLAN channel.

In this act, the management information may be transmitted to respective units based on the VLAN channel after the VLAN channel is created and opened, so as to achieve communication and management between various units and various network elements. For example, if the access unit needs to transmit the management information to the Layer 3 routing unit, the access unit may transmit the management information to the Layer 3 routing unit through the third VLAN channel between the Layer 3 routing unit and the access unit.

The Layer 3 routing unit is configured to implement an ip-based Layer 3 routing function. The Layer 3 routing unit internally runs a routing protocol and calculates a routing table of the entire network. The Layer 3 routing unit may be implemented by software, and may alternatively be implemented by a switch chip possessing an Layer 3 (L3) forwarding function. The VLAN-based management information is mainly based on the information of the ip port. In an exemplary embodiment, in the above act S104, the VLAN channel is created between the Layer 3 routing unit and interactive unit of the other unit. The interactive unit here may be a master control unit or other non-master control unit. For example, when the interactive unit includes the service transmission unit and the master control unit, the VLAN channel between the Layer 3 routing unit and the interactive unit may be created in the following manner that: a first VLAN channel between the Layer 3 routing unit and the service transmission unit is created, a second VLAN channel between the Layer 3 routing unit and the master control unit is created. The interactive unit may further include an access unit. The creation of the VLAN channel between the Layer 3 routing unit and the interactive unit may further includes an act of creating a third VLAN channel between the Layer 3 routing unit and the access unit. Generally, a network element including the access unit may be an access network element, while a network element not including the access unit may be a non-access network element.

In the above act S105, the act that the management information is transmitted through the VLAN channel may include the following acts. The service transmission unit acquires the management information from a service channel, and transmits the management information to the Layer 3 routing unit through the first VLAN channel. The Layer 3 routing unit processes the management information and selects a corresponding VLAN channel to transmit the management information. The act that the management information is transmitted through the VLAN channel may also include at least one of the following acts (1) and (2). In act (1), the access unit acquires the management information from a network management unit, and transmits the management information to the Layer 3 routing unit through the third VLAN channel; the Layer 3 routing unit transmits the management information. In act (2), the service transmission unit acquires the management information from a service channel, and transmits the management information to the Layer 3 routing unit through the first VLAN channel; and the Layer 3 routing unit transmits the management information. In an exemplary embodiment, the act that the Layer 3 routing unit processes the management information and selects the corresponding VLAN channel to transmit the management information may include the following acts. The Layer 3 routing unit determines whether a port of the management information is a local network element; if the port of the management information is the local network element, the Layer 3 routing unit transmits the management information to the master control unit through the second VLAN channel; if the port of the management information is not the local network element, the Layer 3 routing unit transmits the management information to the service transmission unit through the first VLAN channel, and the service transmission unit forwards the management information to other network elements through a service channel. That is, the corresponding VLAN channel for transmission may be selected according to the unit to which the management information is to be transmitted, and therefore, the solution does not need the support of special hardware or new physical channels. The transmission of management information in the entire network can be achieved by virtue of VLAN-based forwarding in a Layer 2 network, thereby simplifying configuration process, reducing design and hardware cost and providing a simple method for constructing a DCN network based on a variety of systems.

### Second embodiment

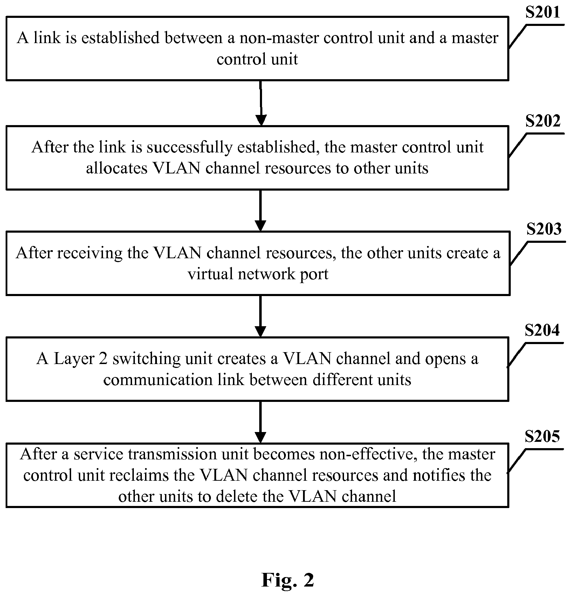

The embodiment provides a method for transmitting management information. As shown in Fig. 2, the process of creating the VLAN channel may include the following acts.

At act S201, a link is established between a non-master control unit and a master control unit.

At act S202, after the link is successfully established, the master control unit allocates VLAN channel resources to other units.

At act S203, after receiving the VLAN channel resources, the other units create a virtual network port.

At act S204, a Layer 2 switching unit creates a VLAN channel and opens a communication link between different units.

At act S205, after a service transmission unit becomes non-effective, the master control unit reclaims the VLAN channel resources and notifies the other units to delete the VLAN channel.

### Third embodiment

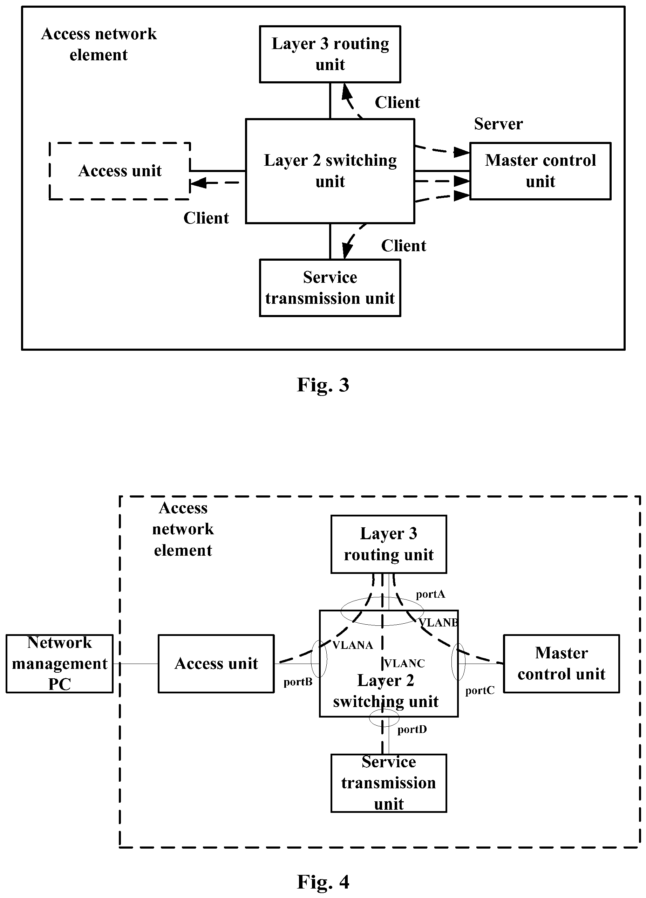

In order to better illustrate the solution provided in the present disclosure, the solution will be described in detail with reference to Figs. 3 to 5 and specific embodiments.

An access unit, a master control unit, a Layer 3 routing unit, and a service transmission unit communicate with a Layer 2 switching unit through an internal Ethernet bus or through internal communication of an operating system. The units in the system may be implemented by software, and are usually deployed on board entities, where one board may accommodate one unit, and may also accommodate multiple units. The board entity provides network port, Transmission Control Protocol/Internet Protocol (tcp/ip) protocol stack, operating system, etc., for communication between different units, and may be configured to encapsulate the management packets of each unit into Ethernet packets and transmit the same. The Media Access Control (mac) and ip of each board are automatically generated based on slot number, and may serve as the identifier for Layer 2 or Layer 3 network communication.

As shown in Fig. 3, the system has one VLAN for internal communication by default, and the master control unit communicates with other units through this VLAN. Within one network element, the master control unit and other units are deployed based on C/S architecture, and the other units, serving as Clients, actively establish links with the master control unit which serves as a server. After the link is established successfully, the other units may send their own information to the master control unit. The information may include: slot number of a board where the unit is located; a unit type (e.g., 1 for access unit, 2 for Layer 2 routing unit, 3 for Layer 3 switching unit, 4 for master control unit, and 5 for service transmission unit); and the number of VLAN channels required (e.g., the number of VLAN channels required for the service transmission unit may be generally determined based on the number of transmission service ports, and the number of VLAN channels required for each of the other units may be set as one by default).

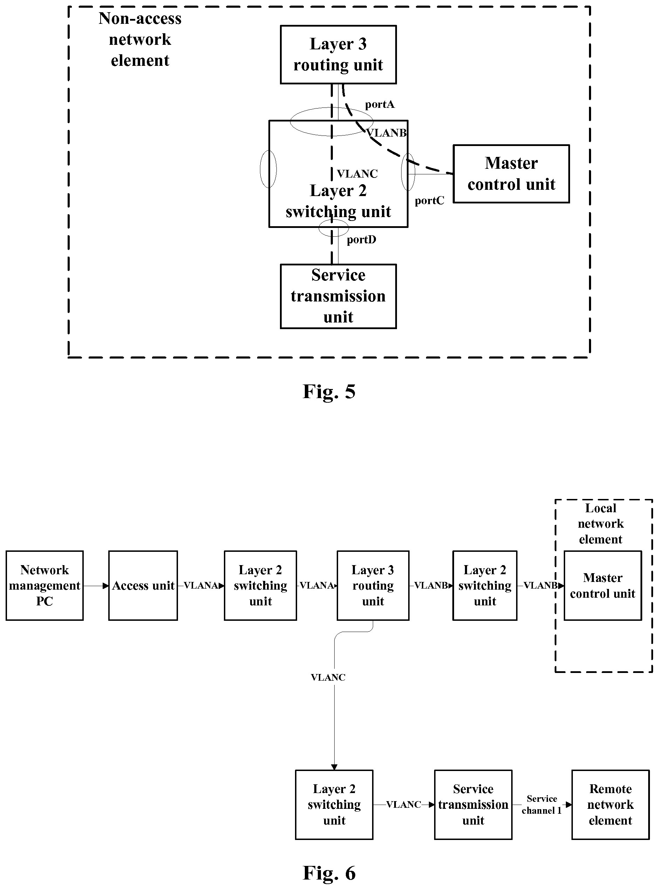

After receiving unit information from other units, the master control unit may allocate VLAN channel resources according to the unit information and notifies other units to create VLAN channels. The first VLAN channel in the present embodiment may be, e.g., a VLANC channel, the second VLAN channel may be, e.g., a VLANB channel, and the third VLAN channel may be, e.g., a VLANC channel. As shown in Fig. 4, for an access network element, VLANA may be allocated to the access unit and the Layer 3 routing unit to implement the transmission from the network management pc to the Layer 3 routing unit. At this time, the master control unit notifies the access unit and the Layer 3 routing unit of the VLANid. The access unit and the Layer 3 routing unit create a virtual network port after receiving the VLANid, where the virtual network port may be dedicated to sending and receiving 802.1Q packets containing a VLANA tag, and the virtual network port may be set as an outgoing port of routing for the Layer 3 routing unit. Similarly, VLANC may be allocated to the service transmission unit and the Layer 3 routing unit to implement information transmission between the network elements. VLANB may be allocated to the Layer 3 routing unit and the master control unit to implement transmission of information from the Layer 3 routing unit to the master control unit of the local network element. Finally, the master control unit notifies the Layer 2 switching unit to create the VLAN channel and adds the physical port of the corresponding unit into the VLAN. The Layer 2 switching unit creates VLANA and adds a portA and a portB into VLANA in a form of tag, so that the VLANA channel between the access unit and the Layer 3 routing unit is opened. In the same way, the portA and a portC are added into VLANB in a form of tag. The portA and a portD are added into VLANC in a form of tag, so as to open VLANC. For a non-access network element, as shown in Fig. 5, a VLANB channel and a VLANC channel may be created in the above manner, and the VLANB channel and the VLANC channel are opened.

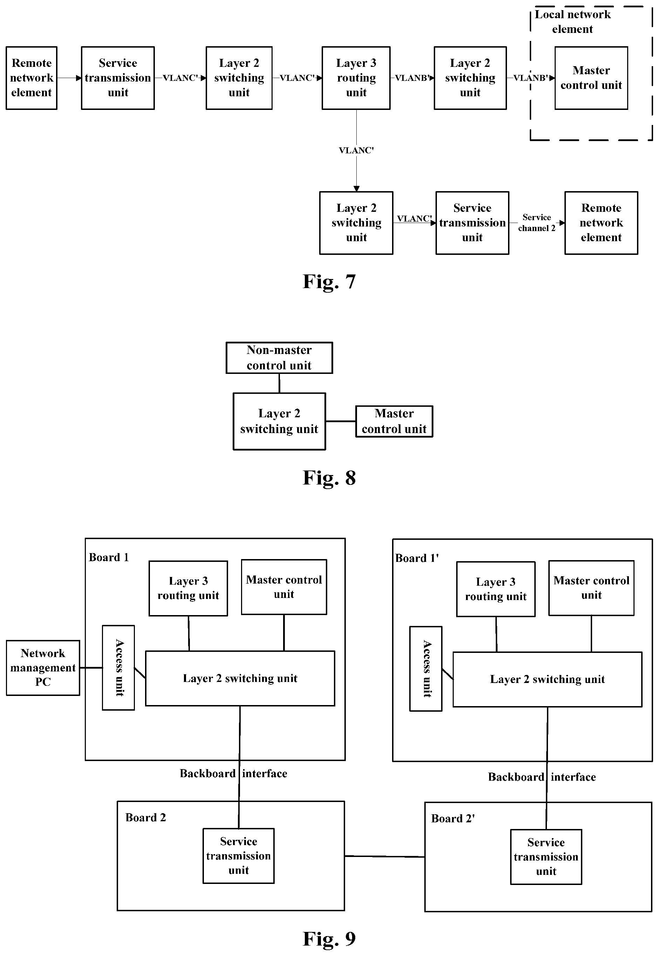

When the VLAN channel is opened, a processing flow of management information, e.g., management packet is shown in Fig. 6. The management packets are transmitted from the PC through the access unit to the Layer 2 switching unit. The access unit encapsulates the management packets into 802.1Q format, and sets VLANid=VLANA. The Layer 2 switching unit transmits the management packets to the Layer 3 routing unit in VLANA according to the 802.1Q tag. The Layer 3 routing unit searches for an outgoing port in a routing table based on dip. If the outgoing port is the local network element, the management packets are directly encapsulated into the VLANB and transmitted to the master control unit. If the outgoing port is a remote network element, the management packets are encapsulated into the VLANC and transmitted to the service transmission unit. The packet processing logic in the service transmission unit removes the 802.1Q tag and recovers the packets into standard Ethernet packets, and encapsulates the standard Ethernet packets into a service channel 1 (if the service channel is for OTN services, the standard Ethernet packets are encapsulated in a General Communication Channel (GCC), if the service channel is for the Ethernet service, then the standard Ethernet packets are encapsulated in a service VLAN ...) for transmission. FIG. 7 shows a processing flow for management information of a non-access network element. The service transmission unit of the remote network element parses the Ethernet packets from the service channel, adds a 802.1Q tag into the Ethernet packets, sets VLANid to be VLANC' and then sends the Ethernet packets to Layer 2 switching unit. The Layer 2 switching unit forwards the packets in VLANC'. If the network element is a local network element, the packets are encapsulated into VLANB' and transmitted to the master control unit. If the network element is a remote network element, the packets are encapsulated into VLANC' and transmitted to the service transmission unit. The packet processing logic in the service transmission unit removes the 802.1Q tag, recovers the packets into the standard Ethernet packets and encapsulates the standard Ethernet packets into a service channel 2 for transmission.

### Fourth embodiment

The embodiment provides a system for transmitting management information. As shown in Fig. 8, the system for transmitting the management information includes a master control unit, one or more non-master control units, and a Layer 2 switching unit. The master control unit is configured to receive a link request from each non-master control unit, allocate a VLAN channel resource to each non-master control unit after a link between the master control unit and the non-master control unit is established, and send information of the allocated VLAN channel resource to a corresponding non-master control unit. Each non-master control unit is configured to receive the information of the VLAN channel resource allocated by the master control unit and create a virtual network port according to the information of the allocated VLAN channel resource, and the virtual network port is configured to transmit and/or receive management information transmitted through a VLAN channel. The master control unit is configured to transmit notification information for creating a VLAN channel to the Layer 2 switching unit. The Layer 2 switching unit is configured to receive the notification information, create the VLAN channel according to the notification information, and add a physical port of a unit corresponding to the VLAN channel into the VLAN channel in a form of a tag. The VLAN channel is configured to transmit the management information.

In an exemplary embodiment, the non-master control unit may include a Layer 3 routing unit. The Layer 2 switching unit may be configured to create the VLAN channel between the Layer 3 routing unit and an interactive unit according to the notification information.

In an exemplary embodiment, the interactive unit may include a master control unit and a service transmission unit. The Layer 2 switching unit may be further configured to create a first VLAN between the Layer 3 routing unit and the service transmission unit, and create a second VLAN channel between the Layer 3 routing unit and the master control unit.

In an exemplary embodiment, the interactive unit may further include an access unit. The Layer 2 switching unit may be further configured to create a third VLAN channel between the Layer 3 routing unit and the access unit.

In an exemplary embodiment, the service transmission unit may be configured to acquire the management information from a service channel and transmit the management information to the Layer 3 routing unit through the first VLAN channel. The Layer 3 routing unit may be configured to receive the management information, process the management information and select a corresponding VLAN channel to transmit the management information.

In an exemplary embodiment, the access unit may be configured to acquire the management information from a network management unit and transmit the management information to the Layer 3 routing unit through the third VLAN channel. The Layer 3 routing unit may be configured to receive the management information, process the management information and select a corresponding VLAN channel to transmit the management information. And/or, the service transmission unit may be configured to acquire the management information from a service channel and transmit the management information to the Layer 3 routing unit through the first VLAN channel. The Layer 3 routing unit may be configured to receive the management information, process the management information and select a corresponding VLAN channel to transmit the management information.

In an exemplary embodiment, the Layer 3 routing unit may be configured to judge whether a port of the management information is a local network element; if the port of the management information is the local network element, transmit the management information to the master control unit through the second VLAN channel; if the port of the management information is not the local network element, transmit the management information to the service transmission unit through the first VLAN channel. The service transmission unit may be further configured to forward the management information to other network elements through the service channel.

The Layer 2 switching unit in the present embodiment may implement a VLAN-based Layer 2 forwarding function by virtue of a Layer 2 switching chip, and may at the same time provide access for other units. The Layer 3 routing unit is configured to implement an ip-based Layer 3 routing function. The Layer 3 routing unit internally runs a routing protocol and calculates a routing table of the entire network. The Layer 3 routing unit may be implemented by software, and may alternatively be implemented by a switch chip possessing an Layer 3 (L3) forwarding function. The master control unit realizes the management of VLAN channel resources and the management of the various units, and may be implemented by software. The service transmission unit provides service transmission channels. The port type of the channel may include but is not limited to Optical Transport Network (OTN), Packet Transport Network (PTN), Synchronous Digital Hierarchy (SDH), Ethernet, etc. The channel may also be configured to transmit monitoring information. An internal Field Programmable Gate Array (FPGA) inserts the management packet into the service transmission channel, for example, the OTN service is inserted into the GCC, the PTN service is transmitted in a separate pw, the SDH service is inserted into a time slot, and the Ethernet service is transmitted in a separate VLAN, and so on. The access unit is generally used in an access network element. The access unit is not required to be included in a non-access network element. An interface may need to be provided to the channel of the Layer 2 switching unit to serve as the access interface of the network management pc, where the type of the interface is not limited. An access may be provided for network management DCN.

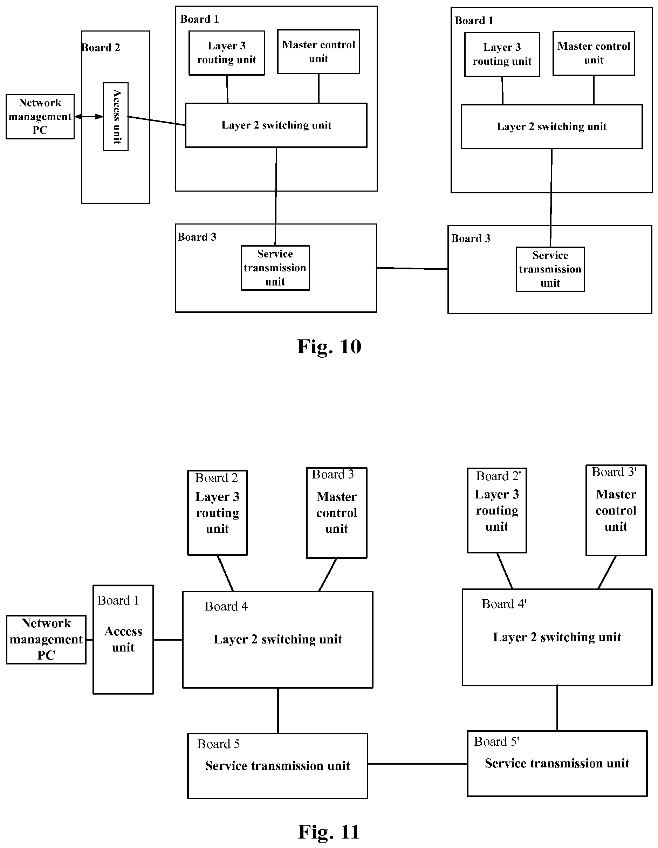

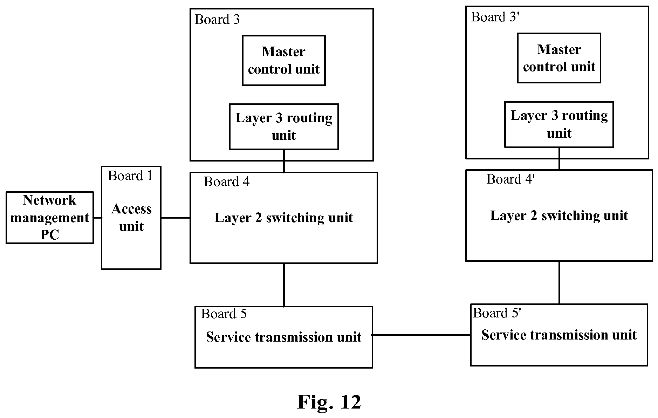

The units in the embodiment may be freely combined in various forms. For example, as shown in Fig. 9, the access unit, the Layer 2 switching unit, the Layer 3 routing unit, and the master control unit may be deployed in a board 1, and the service transmission unit may be deployed in a board 2. Similarly, for the remote network element, the master control unit may be deployed in a board 1 ', and the service transmission unit may be deployed in a board 2'. For another example, as shown in Fig. 10, the access unit may be deployed in a board 1; the Layer 2 switching unit, the Layer 3 routing unit and the master control unit may be deployed in a board 2; and the service transmission unit may be deployed in a board 3. For still another example, as shown in Fig. 11, the access unit, the Layer 2 switching unit, the Layer 3 routing unit, the master control unit and the service transmission unit may be deployed on respective boards, that is, the access unit may be deployed in the board 1, the Layer 2 switching unit may be deployed in the board 2, the Layer 3 routing unit may be deployed in the board 3, the master control unit may be deployed in the board 4, and the service transmission unit may be deployed in the board 5. For the corresponding connected network element, the access unit may be deployed in the board 1', the Layer 2 switching unit may be deployed in the board 2', the Layer 3 routing unit may be deployed in the board 3', the master control unit may be deployed in the board 4', and the service transmission unit may be deployed in the board 5'. As shown in Fig. 12, the Layer 3 routing unit and the master control unit are deployed in the same board, while other units are deployed in respective boards, for example, the Layer 3 routing unit and the master control unit are deployed in the board 3, the Layer 2 switching unit is deployed In the board 4, the access unit is deployed in the board 1, the service transmission unit is deployed in the board 5. For the connected remote network element, the Layer 3 routing unit and the master control unit are deployed in the board 3', the Layer 2 switching unit is deployed in the board 4', and the service transmission unit is deployed in the board 5'. Of course, the specific deployment is not limited to the above examples, and the specific deployment may be determined according to practical situations.

Obviously, a person skilled in the art shall understand that all of the abovementioned modules or acts in the embodiments of the present disclosure may be implemented by using a general calculation device, may be centralized on a single calculation device or may be distributed on a network composed of multiple calculation devices. Alternatively, they may be implemented by using executable program codes of the calculation devices. Thus, they may be stored in a storage device and executed by the calculation devices, the shown or described acts may be executed in a sequence different from this sequence under certain conditions, or they are manufactured into each integrated circuit module respectively, or multiple modules or acts therein are manufactured into a single integrated circuit module. Thus, the present disclosure is not limited to a combination of any specific hardware and software.

The above is only the exemplary embodiments of the present disclosure, and not intended to limit the present disclosure. As will occur to a person skilled in the art, the present disclosure is susceptible to various modifications and changes. Any modifications, equivalent replacements, improvements and the like made within the principle of the present disclosure shall fall within the scope of protection defined by the appended claims of the present disclosure.

### Industrial Applicability

As described above, the method and system for transmitting management information provided by some embodiments of the present disclosure have the following advantageous effects. The solution does not need the support of special hardware or new physical channels. The transmission of management information in the entire network can be achieved by virtue of VLAN-based forwarding in a Layer 2 network, thereby simplifying configuration process, reducing design and hardware cost and providing a simple method for constructing a DCN network based on a variety of systems.

## Claims

1. A method for transmitting management information, in a Data Communication Network, DCN, among units including a master control unit, one or more non-master control units and a Layer 2 switching unit, the method comprising the steps of:
allocating (S101), by a master control unit, a Virtual Local Area Network, VLAN, channel resource to each non-master control unit with which a link is established, and sending, by the master control unit, information of the allocated VLAN channel resource to a corresponding non-master control unit;
creating (S102), by each non-master control unit with which the link is established, a virtual network port according to the information of the allocated VLAN channel resource, wherein the virtual network port is configured to transmit and/or receive management information transmitted through a VLAN channel;
notifying (S103), by the master control unit, the Layer 2 switching unit to create the VLAN channel (VLANA, VLANB, VLANC) between a first unit and a second unit, wherein the first and second units are selected from the group comprising the master control unit and one or more of the non-master control units ; and;
creating (S104), by the Layer 2 switching unit, the VLAN channel (VLANA, VLANB, VLANC), and adding, by the Layer 2 switching unit, information of a physical port of the first unit (portA, port B, portC, portD) and information of a physical port of the second unit (portA, port B, portC, portD) into the VLAN channel in a form of a tag, wherein the physical ports correspond to the VLAN channel; and;
transmitting (S105) the management information through the VLAN channel.

2. The method for transmitting management information as claimed in claim 1, wherein the non-master control unit comprises a Layer 3 routing unit; and wherein the step of creating (S104), by the Layer 2 switching unit, the VLAN channel (S104) comprises the step of : creating, by the Layer 2 switching unit, the VLAN channel between the Layer 3 routing unit and an interactive unit, wherein the interactive unit comprises the master control unit and/or a non-master control unit except for the Layer 3 routing unit.

3. The method for transmitting management information as claimed in claim 2, wherein the interactive unit comprises the master control unit and a service transmission unit; and wherein the step of creating the VLAN channel between the Layer 3 routing unit and the interactive unit comprises the steps of :
creating a first VLAN channel between the Layer 3 routing unit and the service transmission unit, and creating a second VLAN channel between the Layer 3 routing unit and the master control unit.

4. The method for transmitting management information as claimed in claim 3, wherein the interactive unit further comprises an access unit; and wherein the step of creating the VLAN channel between the Layer 3 routing unit and the interactive unit further comprises the step of :
creating a third VLAN channel between the Layer 3 routing unit and the access unit.

5. The method for transmitting management information as claimed in claim 3, wherein the step of transmitting (S105) the management information through the VLAN channel comprises the steps of:
acquiring, by the service transmission unit, the management information from a service channel, and transmitting, by the service transmission unit, the management information to the Layer 3 routing unit through the first VLAN channel;
processing, by the Layer 3 routing unit, the management information and selecting, by the Layer 3 routing unit, a corresponding VLAN channel to transmit the management information.

6. The method for transmitting management information as claimed in claim 4, wherein the step of transmitting (S105) the management information through the VLAN channel further comprises the steps of :
acquiring, by the access unit, the management information from a network management unit, and transmitting, by the access unit, the management information to the Layer 3 routing unit through the third VLAN channel; processing, by the Layer 3 routing unit, the management information and selecting, by the Layer 3 routing unit, a corresponding VLAN channel to transmit the management information;
and/or
acquiring, by the service transmission unit, the management information from a service channel, and transmitting, by the service transmission unit, the management information to the Layer 3 routing unit through the first VLAN channel; processing, by the Layer 3 routing unit, the management information and selecting, by the Layer 3 routing unit, a corresponding VLAN channel to transmit the management information.

7. The method for transmitting management information as claimed in claim 5 or 6, wherein the step of processing, by the Layer 3 routing unit, the management information and selecting, by the Layer 3 routing unit, the corresponding VLAN channel to transmit the management information further comprises the steps of: judging, by the Layer 3 routing unit, whether an outgoing port corresponding to the management information belongs to a local network element; when the outgoing port corresponding to the management information belongs to the local network element, transmitting, by the Layer 3 routing unit, the management information to the master control unit through the second VLAN channel; when the outgoing port corresponding to the management information does not belong to the local network element, transmitting, by the Layer 3 routing unit, the management information to the service transmission unit through the first VLAN channel, and forwarding, by the service transmission unit, the management information to another network element through a service channel.

8. A system for transmitting management information in a Data Communication Network, DCN, among units including a master control unit, one or more non-master control units and a Layer 2 switching unit, the system, comprising a master control unit, the one or more non-master control units and the Layer 2 switching unit, wherein
the master control unit is configured to receive a link request from each non-master control unit, allocate a Virtual Local Area Network, VLAN, channel resource to each non-master control unit after a link between the master control unit and the non-master control unit is established, and configured to send information of the allocated VLAN channel resource to a corresponding non-master control unit;
each non-master control unit with which the link is established is configured to receive the information of the VLAN channel resource allocated by the master control unit and to create a virtual network port according to the information of the allocated VLAN channel resource, wherein the virtual network port is configured to transmit and/or receive management information transmitted through a VLAN channel;
the master control unit is configured to transmit notification information to the Layer 2 switching unit to create the VLAN channel (VLANA, VLANB, VLANC) between a first unit and a second unit, wherein the first and second units are selected from the group comprising the master control unit and one or more of the non-master control units ; and the Layer 2 switching unit is configured to receive the notification information,
to create , the VLAN channel (VLANA, VLANB, VLANC) according to the notification information, and
to add information of a physical port of the first unit (portA, port B, portC, portD) and information of a physical port of the second unit (portA, port B, portC, portD) into the VLAN channel in a form of a tag, wherein the physical ports correspond to the VLAN channel; and
to transmit the management information through the VLAN channel .

9. The system for transmitting management information as claimed in claim 8, wherein the non-master control unit comprises a Layer 3 routing unit, and the Layer 2 switching unit is configured to create the VLAN channel between the Layer 3 routing unit and an interactive unit according to the notification information, wherein the interactive unit comprises the master control unit and/or a non-master control unit except for the Layer 3 routing unit.

10. The system for transmitting management as claimed in claim 9, wherein the interactive unit comprises the master control unit and a service transmission unit, and the Layer 2 switching unit is further configured to create a first VLAN between the Layer 3 routing unit and the service transmission unit, and to create a second VLAN channel between the Layer 3 routing unit and the master control unit.

11. The system for transmitting management information claimed in claim 10, wherein the interactive unit further comprises an access unit; and the Layer 2 switching unit is further configured to create a third VLAN channel between the Layer 3 routing unit and the access unit.

12. The system for transmitting management information as claimed in claim 10, wherein
the service transmission unit is configured to acquire the management information from a service channel and transmit the management information to the Layer 3 routing unit through the first VLAN channel; and the Layer 3 routing unit is configured to process the management information and to select a corresponding VLAN channel to transmit the management information.

13. The system for transmitting management information as claimed in claim 11, wherein the access unit is configured to acquire the management information from a network management unit and to transmit the management information to the Layer 3 routing unit through the third VLAN channel; and the Layer 3 routing unit is configured to process the management information and select a corresponding VLAN channel to transmit the management information;
and/or
the service transmission unit is configured to acquire the management information from a service channel and transmit the management information to the Layer 3 routing unit through the first VLAN channel; and the Layer 3 routing unit is configured to process the management information and to select a corresponding VLAN channel to transmit the management information.

14. The system for transmitting management information as claimed in claim 12 or 13, wherein
the Layer 3 routing unit is configured to judge whether an outgoing port corresponding to the management information belongs to a local network element; and when the outgoing port corresponding to the management information belongs to the local network element, said Layer 3 routing unit is configured to transmit the management information to the master control unit through the second VLAN channel; and when the outgoing port corresponding to the management information does not belong to the local network element, said Layer 3 routing unit is configured to transmit the management information to the service transmission unit through the first VLAN channel, and the service transmission unit is configured to forward the management information to another network element through a service channel.

15. A computer program, comprising program codes which, when executed by a network element, cause the network element to implement the method for transmitting management information in a Data Communication Network, DCN, as claimed in any one of claims 1 to 7.

## Patentansprüche

1. Verfahren zum Übertragen von Verwaltungsinformationen in einem Datenkommunikationsnetzwerk (Data Communication Network, DCN) zwischen Einheiten, die eine Master-Steuereinheit, eine oder mehrere Nicht-Master-Steuereinheiten und eine Schicht-2-Schalteinheit beinhalten, wobei das Verfahren folgende Schritte umfasst:
Zuweisen (S101) einer Virtual-Local-Area-Network- VLAN-Kanalressource an jede Nicht-Master-Steuereinheit, mit der eine Verbindung hergestellt wird, durch eine Master-Steuereinheit und Senden von Informationen über die zugewiesene VLAN-Kanalressource von der Master-Steuereinheit an eine entsprechende Nicht-Master-Steuereinheit;
Erzeugen (S102) eines virtuellen Netzwerkanschlusses gemäß den Informationen über die zugewiesene VLAN-Kanalressource durch jede Nicht-Master-Steuereinheit, mit der die Verbindung hergestellt wird, wobei der virtuelle Netzwerkanschluss eingerichtet ist, über einen VLAN-Kanal übertragene Verwaltungsinformationen zu übertragen und/oder zu empfangen;
Benachrichtigen (S103) der Schicht-2-Schalteinheit durch die Master-Steuereinheit, den VLAN-Kanal (VLAN A, VLAN B, VLAN C) zwischen einer ersten Einheit und einer zweiten Einheit zu erzeugen, wobei die erste und die zweite Einheit aus der Gruppe ausgewählt werden, die Master-Steuereinheit und eine oder mehrere der Nicht-Master-Steuereinheiten umfasst; und
Erzeugen (S104) des VLAN-Kanals (VLAN A, VLAN B, VLAN C) durch die Schicht-2-Schalteinheit und Hinzufügen von Informationen über einen physischen Anschluss der ersten Einheit (Anschluss A, Anschluss B, Anschluss C, Anschluss D) und Informationen über einen physischen Anschluss der zweiten Einheit (Anschluss A, Anschluss B, Anschluss C, Anschluss D) zum VLAN-Kanal in Form eines Tags durch die Schicht-2-Schalteinheit, wobei die physischen Anschlüsse dem VLAN-Kanal entsprechen; und
Übertragen (S105) der Verwaltungsinformationen über den VLAN-Kanal.

2. Verfahren zum Übertragen von Verwaltungsinformationen nach Anspruch 1, wobei die Nicht-Master-Steuereinheit eine Schicht-3-Routing-Einheit umfasst; und wobei der Schritt des Erzeugens (S104) des VLAN-Kanals (S104) durch die Schicht-2-Schalteinheit den Schritt umfasst:
Erzeugen des VLAN-Kanals zwischen der Schicht-3-Routing-Einheit und einer interaktiven Einheit durch die Schicht-2-Schalteinheit, wobei die interaktive Einheit die Master-Steuereinheit und/oder eine Nicht-Master-Steuereinheit mit Ausnahme der Schicht-3-Routing-Einheit umfasst.

3. Verfahren zum Übertragen von Verwaltungsinformationen nach Anspruch 2, wobei die interaktive Einheit die Master-Steuereinheit und eine Dienstübertragungseinheit umfasst; und wobei der Schritt des Erzeugens des VLAN-Kanals zwischen der Schicht-3-Routing-Einheit und der interaktiven Einheit folgende Schritte umfasst:
Erzeugen eines ersten VLAN-Kanals zwischen der Schicht-3-Routing-Einheit und der Dienstübertragungseinheit und Erzeugen eines zweiten VLAN-Kanals zwischen der Schicht-3-Routing-Einheit und der Master-Steuereinheit.

4. Verfahren zum Übertragen von Verwaltungsinformationen nach Anspruch 3, wobei die interaktive Einheit ferner eine Zugriffseinheit umfasst; und wobei der Schritt des Erzeugens des VLAN-Kanals zwischen der Schicht-3-Routing-Einheit und der interaktiven Einheit ferner folgenden Schritt umfasst:
Erzeugen eines dritten VLAN-Kanals zwischen der Schicht-3-Routing-Einheit und der Zugriffseinheit.

5. Verfahren zum Übertragen von Verwaltungsinformationen nach Anspruch 3, wobei der Schritt des Übertragens (S105) der Verwaltungsinformationen über den VLAN-Kanal folgende Schritte umfasst:
Erfassen der Verwaltungsinformationen von einem Dienstkanal durch die Dienstübertragungseinheit und Übertragen der Verwaltungsinformationen über den ersten VLAN-Kanal zur Schicht-3-Routing-Einheit von der Dienstübertragungseinheit;
Verarbeiten der Verwaltungsinformationen durch die Schicht-3-Routing-Einheit und Auswählen eines entsprechenden VLAN-Kanals zum Übertragen der Verwaltungsinformationen durch die Schicht-3-Routing-Einheit.

6. Verfahren zum Übertragen von Verwaltungsinformationen nach Anspruch 4, wobei der Schritt des Übertragens (S105) der Verwaltungsinformationen über den VLAN-Kanal ferner folgende Schritte umfasst:
Erfassen der Verwaltungsinformationen von einer Netzwerkverwaltungseinheit durch die Zugriffseinheit und Übertragen der Verwaltungsinformationen zur Schicht-3-Routing-Einheit über den dritten VLAN-Kanal von der Zugriffseinheit; Verarbeiten der Verwaltungsinformationen durch die Schicht-3-Routing-Einheit und Auswählen eines entsprechenden VLAN-Kanals zum Übertragen der Verwaltungsinformationen durch die Schicht-3-Routing-Einheit;
und/oder
Erfassen der Verwaltungsinformationen von einem Dienstkanal durch die Dienstübertragungseinheit und Übertragen der Verwaltungsinformationen über den ersten VLAN-Kanal zur Schicht-3-Routing-Einheit von der Dienstübertragungseinheit; Verarbeiten der Verwaltungsinformationen durch die Schicht-3-Routing-Einheit und Auswählen eines entsprechenden VLAN-Kanals zum Übertragen der Verwaltungsinformationen durch die Schicht-3-Routing-Einheit.

7. Verfahren zum Übertragen von Verwaltungsinformationen nach Anspruch 5 oder 6, wobei der Schritt des Verarbeitens der Verwaltungsinformationen durch die Schicht-3-Routing-Einheit und des Auswählens des entsprechenden VLAN-Kanals durch die Schicht-3-Routing-Einheit zum Übertragen der Verwaltungsinformationen ferner folgende Schritte umfasst:
Beurteilen, ob ein den Verwaltungsinformationen entsprechender Ausgangsanschluss zu einem lokalen Netzwerkelement gehört, durch die Schicht-3-Routing-Einheit; Übertragen der Verwaltungsinformationen über den zweiten VLAN-Kanal zur Master-Steuereinheit von der Schicht-3-Routing-Einheit, wenn der den Verwaltungsinformationen entsprechende Ausgangsanschluss zu dem lokalen Netzwerkelement gehört; Übertragen der Verwaltungsinformationen über den ersten VLAN-Kanal zur Dienstübertragungseinheit von der Schicht-3-Routing-Einheit und Weiterleiten der Verwaltungsinformationen über einen Dienstkanal zu einem anderen Netzwerkelement von der Dienstübertragungseinheit, wenn der den Verwaltungsinformationen entsprechende Ausgangsanschluss nicht zu dem lokalen Netzwerkelement gehört.

8. System zum Übertragen von Verwaltungsinformationen in einem Datenkommunikationsnetzwerk (DCN) zwischen Einheiten, die eine Master-Steuereinheit, eine oder mehrere Nicht-Master-Steuereinheiten und eine Schicht-2-Schalteinheit beinhalten, wobei das System eine Master-Steuereinheit, die eine oder die mehreren Nicht-Master-Steuereinheiten und die Schicht-2-Schalteinheit umfasst, wobei
die Master-Steuereinheit eingerichtet ist, von jeder Nicht-Master-Steuereinheit eine Verbindungsanforderung zu empfangen und jeder Nicht-Master-Steuereinheit nach Herstellung einer Verbindung zwischen der Master-Steuereinheit und der Nicht-Master-Steuereinheit eine Virtual-Local-Area-Network- VLAN-Kanalressource zuzuweisen, und eingerichtet ist, um Informationen über die zugewiesene VLAN-Kanalressource an eine entsprechende Nicht-Master-Steuereinheit zu senden;
jede Nicht-Master-Steuereinheit, mit der die Verbindung herstellt wurde, eingerichtet ist, die Informationen über die von der Master-Steuereinheit zugewiesene VLAN-Kanalressource zu empfangen und gemäß den Informationen über die zugewiesene VLAN-Kanalressource einen virtuellen Netzwerkanschluss zu erzeugen, wobei der virtuelle Netzwerkanschluss eingerichtet ist, über einen VLAN-Kanal übertragene Verwaltungsinformationen zu übertragen und/oder zu empfangen;
die Master-Steuereinheit eingerichtet ist, Benachrichtigungsinformationen zur Schicht-2-Schalteinheit zu übertragen, um den VLAN-Kanal (VLAN A, VLAN B, VLAN C) zwischen einer ersten Einheit und einer zweiten Einheit zu erzeugen, wobei die erste und die zweite Einheit aus der Gruppe ausgewählt sind, die die Master-Steuereinheit und eine oder mehrere der Nicht-Master-Steuereinheiten umfasst; und
die Schicht-2-Schalteinheit eingerichtet ist, die Benachrichtigungsinformationen zu empfangen,
den VLAN-Kanal (VLAN A, VLAN B, VLAN C) entsprechend den Benachrichtigungsinformationen zu erzeugen, und
Informationen über einen physischen Anschluss der ersten Einheit (Anschluss A, Anschluss B, Anschluss C, Anschluss D) und Informationen über einen physischen Anschluss der zweiten Einheit (Anschluss A, Anschluss B, Anschluss C, Anschluss D) in Form eines Tags zum VLAN-Kanal hinzuzufügen, wobei die physischen Anschlüsse dem VLAN-Kanal entsprechen; und
die Verwaltungsinformationen über den VLAN-Kanal zu übertragen.

9. System zum Übertragen von Verwaltungsinformationen nach Anspruch 8, wobei die Nicht-Master-Steuereinheit eine Schicht-3-Routing-Einheit umfasst und die Schicht-2-Schalteinheit eingerichtet ist, den VLAN-Kanal zwischen der Schicht-3-Routing-Einheit und einer interaktiven Einheit entsprechend den Benachrichtigungsinformationen zu erzeugen, wobei die interaktive Einheit die Master-Steuereinheit und/oder eine Nicht-Master-Steuereinheit mit Ausnahme der Schicht-3-Routing-Einheit umfasst.

10. System zum Übertragen von Verwaltungsinformationen nach Anspruch 9, wobei die interaktive Einheit die Master-Steuereinheit und eine Dienstübertragungseinheit umfasst und die Schicht-2-Schalteinheit ferner eingerichtet ist, ein erstes VLAN zwischen der Schicht-3-Routing-Einheit und der Dienstübertragung zu erzeugen und einen zweiten VLAN-Kanal zwischen der Schicht-3-Routing-Einheit und der Master-Steuereinheit zu erzeugen.

11. System zum Übertragen von Verwaltungsinformationen nach Anspruch 10, wobei die interaktive Einheit ferner eine Zugriffseinheit umfasst; und die Schicht-2-Schalteinheit ferner eingerichtet ist, einen dritten VLAN-Kanal zwischen der Schicht-3-Routing-Einheit und der Zugriffseinheit zu erzeugen.

12. System zum Übertragen von Verwaltungsinformationen nach Anspruch 10, wobei
die Dienstübertragungseinheit eingerichtet ist, die Verwaltungsinformationen von einem Dienstkanal zu erfassen und die Verwaltungsinformationen über den ersten VLAN-Kanal zur Schicht-3-Routing-Einheit zu übertragen; und
die Schicht-3-Routing-Einheit eingerichtet ist, die Verwaltungsinformationen zu verarbeiten und einen entsprechenden VLAN-Kanal zur Übertragung der Verwaltungsinformationen auszuwählen.

13. System zum Übertragen von Verwaltungsinformationen nach Anspruch 11, wobei
die Zugriffseinheit eingerichtet ist, die Verwaltungsinformationen von einer Netzwerkverwaltungseinheit zu erfassen und die Verwaltungsinformationen über den dritten VLAN-Kanal zur Schicht-3-Routing-Einheit zu übertragen; und
die Schicht-3-Routing-Einheit eingerichtet ist, die Verwaltungsinformationen zu verarbeiten und einen entsprechenden VLAN-Kanal zur Übertragung der Verwaltungsinformationen auszuwählen;
und/oder
die Dienstübertragungseinheit eingerichtet ist, die Verwaltungsinformationen von einem Dienstkanal zu erfassen und die Verwaltungsinformationen über den ersten VLAN-Kanal zur Schicht-3-Routing-Einheit zu übertragen; und
die Schicht-3-Routing-Einheit eingerichtet ist, die Verwaltungsinformationen zu verarbeiten und einen entsprechenden VLAN-Kanal zur Übertragung der Verwaltungsinformationen auszuwählen.

14. System zum Übertragen von Verwaltungsinformationen nach Anspruch 12 oder 13, wobei die Schicht-3-Routing-Einheit eingerichtet ist, zu beurteilen, ob ein den Verwaltungsinformationen entsprechender Ausgangsanschluss zu einem lokalen Netzwerkelement gehört; und
die Schicht-3-Routing-Einheit eingerichtet ist, die Verwaltungsinformationen über den zweiten VLAN-Kanal zur Master-Steuereinheit zu übertragen, wenn der den Verwaltungsinformationen entsprechende Ausgangsanschluss zu dem lokalen Netzwerkelement gehört; und die Schicht-3-Routing-Einheit eingerichtet ist, die Verwaltungsinformationen über den ersten VLAN-Kanal zur Dienstübertragungseinheit zu übertragen, und die Dienstübertragungseinheit eingerichtet ist, die Verwaltungsinformationen über einen Servicekanal zu einem anderen Netzwerkelement weiterzuleiten, wenn der den Verwaltungsinformationen entsprechende Ausgangsanschluss nicht zu dem lokalen Netzwerkelement gehört.

15. Computerprogramm, umfassend Programmcodes, die beim Ausführen durch ein Netzelement das Netzwerkelement veranlassen, das Verfahren zum Übertragen von Verwaltungsinformationen in einem Datenkommunikationsnetzwerk (DCN) nach einem der Ansprüche 1 bis 7 umzusetzen.

## Revendications

1. Procédé de transmission d'informations de gestion dans un réseau de communication de données, DCN, parmi des unités comprenant une unité de commande principale, une ou plusieurs unités de commande non principales et une unité de commutation de couche 2, le procédé comprenant les étapes consistant à :
attribuer (S101), par une unité de commande principale, une ressource de canal de réseau local virtuel, VLAN, à chaque unité de commande non principale avec laquelle est établie une liaison et envoyer par l'unité de commande principale des informations de la ressource de canal de VLAN attribuée à une unité de commande non principale correspondante ;
créer (S102), par chaque unité de commande non principale avec laquelle est établi la liaison, un port de réseau virtuel en fonction des informations de la ressource de canal de VLAN attribuée, le port de réseau virtuel étant configuré pour transmettre et/ou pour recevoir des informations de gestion transmises à travers un canal de VLAN ;
notifier (S103), par l'unité de commande principale, l'unité de commutation de couche 2 pour créer le canal de VLAN (VLANA, VLANB, VLANC) entre une première unité et une seconde unité, les première et seconde unités étant sélectionnées dans le groupe comprenant l'unité de commande principale et une ou plusieurs des unités de commande non principales ; et
créer (S104), par l'unité de commutation de couche 2, le canal de VLAN (VLANA, VLANB, VLANC) et ajouter, par l'unité de commutation de couche 2, les informations d'un port physique de la première unité (portA, port B, portC, portD) et les informations d'un port physique de la seconde unité (portA, port B, portC, portD) dans le canal de VLAN sous la forme d'une étiquette, les ports physiques correspondant au canal de VLAN ; et
transmettre (S105) les informations de gestion à travers le canal de VLAN.

2. Procédé de transmission d'informations de gestion selon la revendication 1, dans lequel l'unité de commande non principale comprend une unité de routage de couche 3 ; et dans lequel l'étape de création (S104), par l'unité de commutation de couche 2, du canal de VLAN (S104) comprend l'étape consistant à :
créer, par l'unité de commutation de couche 2, le canal de VLAN entre l'unité de routage de couche 3 et une unité interactive, l'unité interactive comprenant l'unité de commande principale et/ou une unité de commande non principale, à l'exception de l'unité de routage de couche 3.

3. Procédé de transmission d'informations de gestion selon la revendication 2, dans lequel l'unité interactive comprend l'unité de commande principale et une unité de transmission de service; et dans lequel l'étape de création du canal de VLAN entre l'unité de routage de couche 3 et l'unité interactive comprend les étapes consistant à :
créer un premier canal de VLAN entre l'unité de routage de couche 3 et l'unité de transmission de service et créer un deuxième canal de VLAN entre l'unité de routage de couche 3 et l'unité de commande principale.

4. Procédé de transmission d'informations de gestion selon la revendication 3, dans lequel l'unité interactive comprend en outre une unité d'accès ; et dans lequel l'étape de création du canal de VLAN entre l'unité de routage de couche 3 et l'unité interactive comprend en outre l'étape consistant à :
créer un troisième canal de VLAN entre l'unité de routage de couche 3 et l'unité d'accès.

5. Procédé de transmission d'informations de gestion selon la revendication 3, dans lequel l'étape consistant à transmettre (S105) les informations de gestion à travers le canal de VLAN comprend les étapes consistant à :
acquérir, par l'unité de transmission de service, les informations de gestion d'un canal de service et transmettre, par l'unité de transmission de service, les informations de gestion à l'unité de routage de couche 3 par le premier canal de VLAN;
traiter, par l'unité de routage de couche 3, les informations de gestion et sélectionner, par l'unité de routage de couche 3, un canal de VLAN correspondant pour transmettre les informations de gestion.

6. Procédé de transmission d'informations de gestion selon la revendication 4, dans lequel l'étape consistant à transmettre (S105) les informations de gestion à travers le canal de VLAN comprend en outre les étapes consistant à :
acquérir, par l'unité d'accès, les informations de gestion auprès d'une unité de gestion de réseau et transmettre, par l'unité d'accès, les informations de gestion à l'unité de routage de couche 3 à travers le troisième canal de VLAN ; traiter, par l'unité de routage de couche 3, les informations de gestion et sélectionner, par l'unité de routage de couche 3, un canal de VLAN correspondant pour transmettre les informations de gestion;
et/ou
acquérir, par l'unité de transmission de service, les informations de gestion d'un canal de service et transmettre, par l'unité de transmission de service, les informations de gestion à l'unité de routage de couche 3 par le premier canal de VLAN ; traiter, par l'unité de routage de couche 3, les informations de gestion et sélectionner, par l'unité de routage de couche 3, un canal de VLAN correspondant pour transmettre les informations de gestion.

7. Procédé de transmission d'informations de gestion selon la revendication 5 ou 6, dans lequel l'étape de traitement, par l'unité de routage de couche 3, des informations de gestion et de sélection, par l'unité de routage de couche 3, du canal de VLAN correspondant pour transmettre les informations de gestion comprend les étapes consistant à :
déterminer, par l'unité de routage de couche 3, si un port sortant correspondant aux informations de gestion appartient à un élément de réseau local ; lorsque le port sortant correspondant aux informations de gestion appartient à l'élément de réseau local, transmettre, par l'unité de routage de couche 3, les informations de gestion à l'unité de commande principale à travers le deuxième canal de VLAN; lorsque le port sortant correspondant aux informations de gestion n'appartient pas à l'élément de réseau local, transmettre, par l'unité de routage de couche 3, les informations de gestion à l'unité de transmission de service à travers le premier canal de VLAN et transférer, par l'unité de transmission de service, les informations de gestion à un autre élément de réseau à travers un canal de service.

8. Système destiné à transmettre des informations de gestion dans un réseau de communication de données, DCN, parmi des unités comprenant une unité de commande principale, une ou plusieurs unités de commande non principales et une unité de commutation de couche 2, le système comprenant une unité de commande principale, l'au moins une unité de commande non principale et l'unité de commutation de couche 2,
l'unité de commande principale étant configurée pour recevoir une demande de liaison de chaque unité de commande non principale, pour attribuer une ressource de canal de réseau local virtuel, VLAN, à chaque unité de commande non principale, après qu'une liaison entre l'unité de commande principale et l'unité de commande non principale a été établie et étant configurée pour envoyer des informations sur la ressource de canal de VLAN attribuée à une unité de commande non principale correspondante;
chaque unité de commande non principale avec laquelle est établie la liaison étant configurée pour recevoir les informations de la ressource de canal de VLAN attribuée par l'unité de commande principale et pour créer un port de réseau virtuel en fonction des informations de la ressource de canal de VLAN attribuée, le port de réseau virtuel étant configuré pour transmettre et/ou pour recevoir des informations de gestion transmises à travers un canal de VLAN;
l'unité de commande principale étant configurée pour transmettre des informations de notification à l'unité de commutation de couche 2 afin de créer le canal de VLAN (VLANA, VLANB, VLANC) entre une première unité et une seconde unité, les première et seconde unités étant sélectionnées dans le groupe comprenant l'unité de commande principale et une ou plusieurs des unités de commande non principales ; et
l'unité de commutation de couche 2 étant configurée pour recevoir les informations de notification,
pour créer le canal de VLAN (VLANA, VLANB, VLANC) en fonction des informations de notification et
pour ajouter des informations d'un port physique de la première unité (portA, portB, portC, portD) et des informations d'un port physique de la seconde unité (portA, portB, portC, portD) dans le canal de VLAN sous la forme d'une étiquette, les ports physiques correspondant au canal de VLAN; et
pour transmettre les informations de gestion à travers le canal de VLAN.

9. Système de transmission d'informations de gestion selon la revendication 8, dans lequel l'unité de commande non principale comprend une unité de routage de couche 3 et où l'unité de commutation de couche 2 est configurée pour créer le canal de VLAN entre l'unité de routage de couche 3 et une unité interactive selon les informations de notification, l'unité interactive comprenant l'unité de commande principale et/ou une unité de commande non principale, à l'exception de l'unité de routage de couche 3.

10. Système de transmission d'informations de gestion selon la revendication 9, dans lequel l'unité interactive comprend l'unité de commande principale et une unité de transmission de service et où l'unité de commutation de couche 2 est en outre configurée pour créer un premier VLAN entre l'unité de routage de couche 3 et l'unité de transmission de service et pour créer un deuxième canal de VLAN entre l'unité de routage de couche 3 et l'unité de commande principale.

11. Système de transmission d'informations de gestion selon la revendication 10, dans lequel l'unité interactive comprend en outre une unité d'accès; et où l'unité de commutation de couche 2 est en outre configurée pour créer un troisième canal de VLAN entre l'unité de routage de couche 3 et l'unité d'accès.

12. Système de transmission d'informations de gestion selon la revendication 10, dans lequel
l'unité de transmission de service est configurée pour acquérir les informations de gestion à partir d'un canal de service et pour transmettre les informations de gestion à l'unité de routage de couche 3 à travers le premier canal de VLAN; et
l'unité de routage de couche 3 est configurée pour traiter les informations de gestion et pour sélectionner un canal de VLAN correspondant pour transmettre les informations de gestion.

13. Système de transmission d'informations de gestion selon la revendication 11, dans lequel
l'unité d'accès est configurée pour acquérir les informations de gestion d'une unité de gestion de réseau et pour transmettre les informations de gestion à l'unité de routage de couche 3 à travers le troisième canal de VLAN; et
l'unité de routage de couche 3 est configurée pour traiter les informations de gestion et pour sélectionner un canal de VLAN correspondant pour transmettre les informations de gestion;
et/ou
l'unité de transmission de service est configurée pour acquérir les informations de gestion à partir d'un canal de service et pour transmettre les informations de gestion à l'unité de routage de couche 3 à travers le premier canal de VLAN; et
l'unité de routage de couche 3 est configurée pour traiter les informations de gestion et pour sélectionner un canal de VLAN correspondant pour transmettre les informations de gestion.

14. Système de transmission d'informations de gestion selon la revendication 12 ou 13, dans lequel l'unité de routage de couche 3 est configurée pour déterminer si un port sortant correspondant aux informations de gestion appartient à un élément de réseau local; et lorsque le port sortant correspondant aux informations de gestion appartient à l'élément de réseau local, ladite unité de routage de couche 3 est configurée pour transmettre les informations de gestion à l'unité de commande principale à travers le deuxième canal de VLAN; et lorsque le port sortant correspondant aux informations de gestion n'appartient pas à l'élément de réseau local, ladite unité de routage de couche 3 est configurée pour transmettre les informations de gestion à l'unité de transmission de service à travers le premier canal de VLAN et l'unité de transmission de service est configurée pour transférer les informations de gestion à un autre élément de réseau à travers un canal de service.

15. Programme informatique comprenant des codes de programme qui, lorsqu'ils sont exécutés par un élément de réseau, amènent l'élément de réseau à mettre en oeuvre le procédé de transmission d'informations de gestion dans un réseau de communication de données, DCN, selon l'une quelconque des revendications 1 à 7.
